# EUROPEAN PATENT APPLICATION

(11) **EP 4 834 658 A1**
(43) Date of publication of application: **04.11.2026**
(21) Application number: 24909615.7
(22) Date of filing: 24.06.2024
(51) Int. Cl.: B60N 3/00, A47C 27/08, A47C 17/80

(54) **INFLATABLE MATTRESS ASSEMBLY, INFLATABLE MATTRESS SYSTEM, AND VEHICLE**

(30) Priority: 29.12.2023 CN 202323666400 U
(71) Applicant: BYD Company Limited, Shenzhen, Guangdong 518118 (CN)
(72) Inventor: ZHOU, Qing, Shenzhen, Guangdong 518118 (CN); HE, Jinqiao, Shenzhen, Guangdong 518118 (CN); JI, Haixu, Shenzhen, Guangdong 518118 (CN); KANG, Cuihua, Shenzhen, Guangdong 518118 (CN); SHI, Guoqin, Shenzhen, Guangdong 518118 (CN)
(74) Representative: Mathys & Squire
(86) International application number: PCT/CN2024/101038
(87) International publication number: WO 2025/138655

(57) **Abstract**

A vehicle, comprising an inflatable mattress system. The inflatable mattress system comprises an inflatable mattress assembly. The inflatable mattress assembly comprises an inflatable mattress and a storage device; the storage device can be switchable between a folded state and an unfolded state; the storage device comprises a connecting structure; the connecting structure enables the storage device to be kept in the folded state to form a storage space; in the folded state, the inflatable mattress is folded and stored in the storage space; the inflatable mattress is inflated to expand to trigger to switch the state of the connecting structure, so that the storage device is switched from the folded state to the unfolded state; and in the unfolded state, the inflatable mattress is inflated to be completely unfolded and laid flat, and a mattress limiting structure provided at the bottom of the inflatable mattress is used to automatically secure the inflatable mattress.

## Description

### CROSS-REFERENCE TO RELATED APPLICATIONS

The present disclosure claims priority of Chinese Patent Application No. 202323666400.X filed on December 29, 2023, entitled "INFLATABLE MATTRESS ASSEMBLY, INFLATABLE MATTRESS SYSTEM, AND VEHICLE", which is incorporated herein by reference in its entirety.

### FIELD

The present disclosure relates to the field of vehicle-mounted equipment technologies, and in particular, to an inflatable mattress assembly, an inflatable mattress system and a vehicle.

### BACKGROUND

In the related art, a user needs to unfold an inflatable mattress and connect an inflation pump, and air is supplied into an inflation chamber of the inflatable mattress via the inflation pump, the inflation process is cumbersome and complicated, and the degree of automation is low.

### SUMMARY

The present disclosure provides an inflatable mattress assembly, an inflatable mattress system and a vehicle.

In a first aspect, the present disclosure provides an inflatable mattress assembly for a vehicle, including an inflatable mattress and a storage device;
the storage device defines a storage space, and the storage device can be switchable between a folded state and an unfolded state; in the folded state, the inflatable mattress is folded and stored in the storage space;
the storage device further includes a connecting structure, the connecting structure is configured to maintain the storage device in the folded state, the inflatable mattress is configured to, upon inflation, trigger the connecting structure to switch states, so that the storage device is switched from the folded state to the unfolded state; and in the unfolded state, the inflatable mattress is further inflated to be completely unfolded and laid flat.

When the inflatable mattress is not in use, the inflatable mattress is in a folded and stored state and is stored in the storage device. When inflation is required, the inflatable mattress is inflated to expand, which can trigger the connecting structure of the storage device to switch states, and the storage device is switched from the folded state to the unfolded state. In the unfolded state, the inflatable mattress is inflated to be completely unfolded and laid flat. In this way, the unfolding process of the inflatable mattress does not require manual operation, and the degree of automation is high.

In some embodiments, the storage device is configured to be arranged in a storage compartment beneath a luggage compartment of the vehicle.

In some embodiments, a mattress limiting structure is arranged at a bottom of the inflatable mattress, and after the inflatable mattress is inflated, the mattress limiting structure is configured to abut against the storage device.

In some embodiments, the storage device further includes a storage box body and a cover plate; the cover plate is connected to the storage box body via a pivot structure, and when the storage device is in the folded state, the storage box body and the cover plate are configured to form a storage space. After the inflatable mattress is inflated, the cover plate is pivoted to a position where it does not occupy the space required for unfolding the inflatable mattress.

In some embodiments, the connecting structure is a pressure locking structure, a magnetic connecting structure, a pivot structure or a hook-and-loop fastener.

In some embodiments, the inflatable mattress further includes an electrical connector, wherein the electrical connector is electrically connected to an on-board power supply of the vehicle. When the electrical connector is disconnected, the inflatable mattress is completely separated from the storage device.

In some embodiments, the inflatable mattress assembly further includes a control module and an inflation/deflation motor, wherein the control module is configured to control the inflation/deflation motor to inflate or deflate the inflatable mattress.

In some embodiments, the inflatable mattress assembly further includes an air pressure detection device, wherein the air pressure detection device is configured to detect an air pressure of the inflatable mattress and transmit the detected air pressure to the control module.

In a second aspect, the present disclosure provides a vehicle-mounted inflatable mattress system, including a user interaction device and an inflatable mattress assembly according to the first aspect. The user interaction device is electrically connected to the inflatable mattress assembly, and the user interaction is configured to acquire a user instruction and transmit the user instruction to the inflatable mattress assembly.

In a third aspect, the present disclosure further provides a vehicle, including a vehicle-mounted inflatable mattress assembly according to the first aspect or a vehicle-mounted inflatable mattress system according to the second aspect.

The present disclosure provides an inflatable mattress assembly, an inflatable mattress system and a vehicle, wherein, a storage device is configured to be arranged in a storage compartment beneath a luggage compartment of a vehicle. In a folded state, the storage device defines a storage space, and the inflatable mattress is folded and stored in the storage space. After the inflatable mattress is inflated, the storage device is switched from the folded state to the unfolded state, and in the unfolded state, the inflatable mattress is inflated to be completely unfolded and laid flat. In this way, in the folded state, the inflatable mattress is folded and stored in the storage space without occupying the space of the luggage compartment; after the electrical connector is unplugged, the inflatable mattress can be separated from the vehicle and stored in other locations, and the storage device can also be used to store other items. When the inflatable mattress is needed, the inflatable mattress can be automatically inflated, unfolded and laid flat to a usable state, and a mattress limiting structure provided at the bottom of the inflatable mattress is used to secure the inflatable mattress. The user only needs one-touch operation, it offers a high degree of automation and it is not prone to displacement during use, providing excellent user experience.

### BRIEF DESCRIPTION OF THE DRAWINGS

The above and/or additional aspects and advantages of the present disclosure will become apparent and readily understood from the description of the embodiments in conjunction with the following drawings, in which:
FIG. 1 is a schematic view of an inflatable mattress assembly according to an embodiment of the present disclosure;
FIG. 2 is another schematic view of the inflatable mattress assembly according to an embodiment of the present disclosure;
FIG. 3 is another schematic view of the inflatable mattress assembly according to an embodiment of the present disclosure;
FIG. 4 is a schematic view of an inflatable mattress according to an embodiment of the present disclosure;
FIG. 5 is another schematic view of the inflatable mattress according to an embodiment of the present disclosure;
FIG. 6 is another schematic view of the inflatable mattress assembly according to an embodiment of the present disclosure;
FIG. 7 is another schematic view of the inflatable mattress assembly according to an embodiment of the present disclosure;
FIG. 8 is a schematic view of a vehicle according to an embodiment of the present disclosure.

### Reference numerals:

Vehicle 1; Inflatable mattress assembly 10; User interaction device 20; Luggage compartment 30; Inflatable mattress 110; Storage device 120; Inflation/deflation device 111; Mattress limiting structure 112; Inflation/deflation motor 1111; Control module 1112; Electrical connector 1113; Air pressure detection device 1114; Button 1115; Connecting structure 121; Storage box body 122; Cover plate 123; First connecting member 1211; Second connecting member 1212.

### DETAILED DESCRIPTION

The embodiments of the present disclosure are described below in detail, examples of the embodiments are shown in the accompanying drawings, wherein same or similar reference signs in all the accompanying drawings indicate same or similar components or components having same or similar functions. Obviously, the described embodiments are merely some embodiments of the present disclosure, rather than all of the embodiments. All other embodiments derived by those skilled in the art based on the embodiments of the present disclosure without creative efforts shall fall within the protection scope of the present disclosure.

The following descriptions of the embodiments are provided with reference to the accompanying drawings, which illustrate specific embodiments in which the present disclosure may be implemented. Directional terms mentioned herein, such as "upper", "lower", "front", "rear", "left", "right", "inner", "outer", "side" and the like, are only used with reference to the orientations in the accompanying drawings, therefore, the directional terms are used for better and clearer illustration and understanding of the present disclosure, and do not indicate or imply that the referred device or component must have a specific orientation, be constructed and operated in a specific orientation, and thus will not be construed as a limitation on the present disclosure.

In addition, serial numbers assigned to components herein, such as "first", "second" and the like, are only used to distinguish the described objects and do not have any sequence or technical meaning. The terms "connection" and "coupling" used in the present disclosure, unless otherwise specified, include both direct and indirect connection (coupling).

In addition, the present disclosure provides examples of various specific processes and materials, but those skilled in the art may recognize the application of other processes and/or the use of other materials.

In the related art, an inflatable mattress used in a vehicle comprises a storage device and an inflatable mattress. When in use, a user needs to take the inflatable mattress out of the storage device, manually unfold the inflatable mattress and then inflate the inflatable mattress. The inflatable mattress needs to be manually operated by the user from a folded state to an unfolded and usable state, which is difficult to operate in a narrow space of a vehicle compartment, resulting in poor user experience.

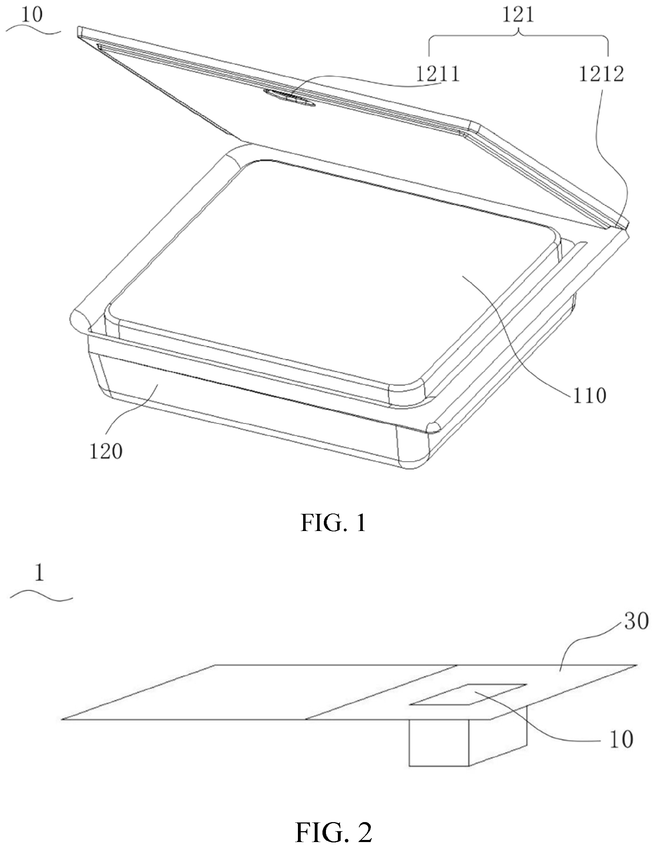

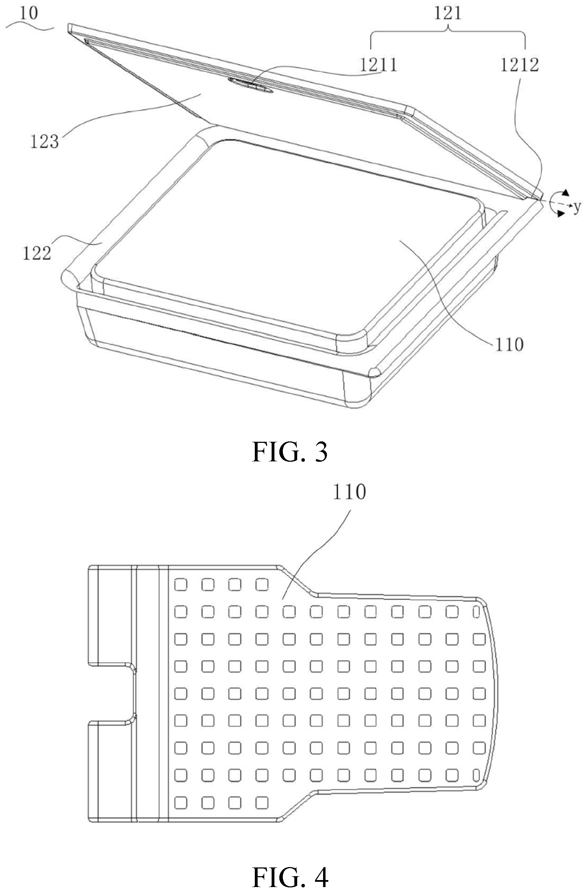

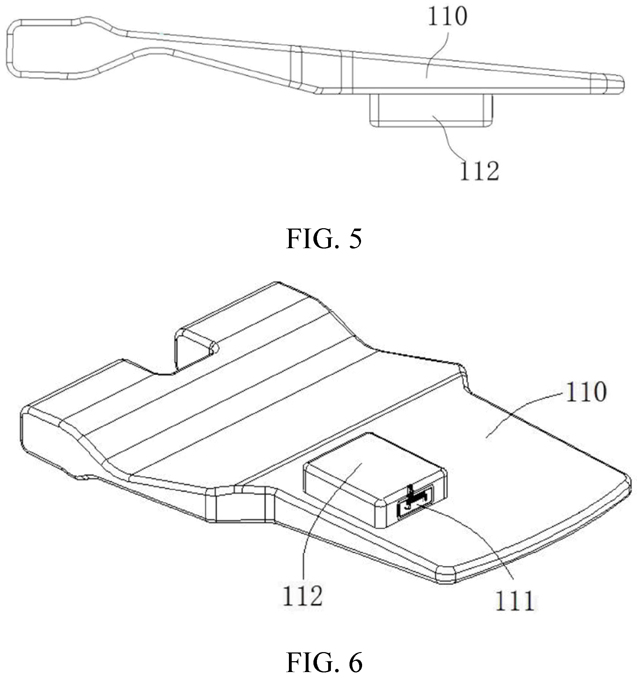

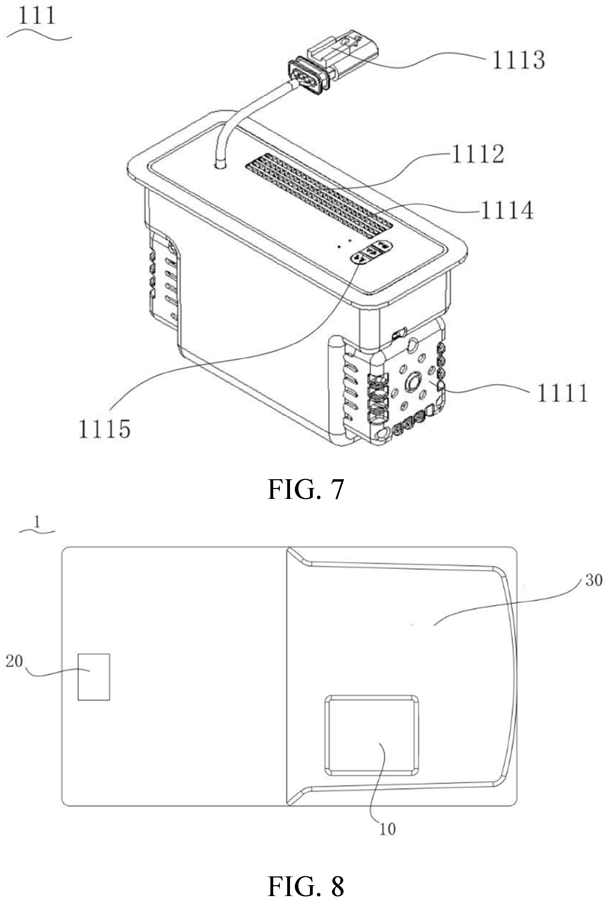

Referring to Figures 1 to 8;
the present disclosure discloses an embodiment of an inflatable mattress assembly 10, the inflatable mattress assembly 10 comprises an inflatable mattress 110 and a storage device 120; wherein the storage device 120 comprises a connecting structure 121. The storage device 120 defines a storage space and can be switchable between a folded state and an unfolded state, in the folded state, the inflatable mattress 110 is folded and stored in the storage space;
the connecting structure 121 is configured to maintain the storage device 120 in the folded state, the inflatable mattress 110 is configured to, upon inflation, trigger the connecting structure 121 to switch states, so that the storage device 120 is switched from the folded state to the unfolded state. In the unfolded state, the inflatable mattress 110 can be further inflated to be completely unfolded and laid flat.

It will be understood that, in the inflatable mattress assembly 10 implemented in the present disclosure, after the inflatable mattress 110 is inflated, the connecting structure 121 is configured to automatically switch states, the storage device 120 is switched to the unfolded state, and the inflatable mattress 110 can be further inflated to be completely unfolded and laid flat. The user does not need to perform manual operation, and the inflatable mattress 110 is automatically unfolded from the folded state to a usable condition, and it offers a high degree of automation and excellent user experience.

In some embodiments, the storage device 120 can be configured to be arranged in a storage compartment beneath a luggage compartment 30 of the vehicle 1, so that the inflatable mattress 110 does not occupy the luggage compartment space of the vehicle 1 after being folded and stored.

In some embodiments, a mattress limiting structure 112 is arranged at a bottom of the inflatable mattress 110, after the inflatable mattress 110 is inflated, the mattress limiting structure 112 is configured to abut against the storage device 120 to secure the inflatable mattress 110, so that the inflatable mattress 110 is not prone to displacement during use after being unfolded.

In some embodiments, the storage device 120 further comprises a storage box body 122 and a cover plate 123; the cover plate 123 is connected to the storage box body 122 via a first connecting member 1211 and a second connecting member 1212. The first connecting member 1211 is rotatable about a y-axis, and the second connecting member 1212 is switched from a locked state to an unlocked state when an air pressure reaches a preset threshold.

When the storage device 120 is in the folded state, the storage box body 122 and the cover plate 123 are configured to form a storage space, and the second connecting member 1212 is in the locked state to maintain the storage device 120 in the folded state. After the inflatable mattress 110 is inflated and the air pressure reaches an unlocking threshold of the second connecting member 1212, the second connecting member 1212 is unlocked, and the first connecting member 1211 drives the cover plate 123 to pivot 180° about the y-axis under the inflation pressure of the inflatable mattress 110. After pivoting, the cover plate 123 is located below the inflatable mattress 110, and the inflatable mattress 110 is further inflated to be completely unfolded and laid flat. It will be understood that, after being pivoted, the cover plate 123 is pressed under the inflatable mattress 110 without affecting the unfolding of the inflatable mattress 110.

In some embodiments, the connecting structure 121 may be one or any combination of a pressure locking structure, a magnetic connecting structure, a pivot structure and a hook-and-loop fastener.

For example, the connecting structure 121 comprises a pressure locking structure and a magnetic connecting structure; for another example, the connecting structure 121 comprises two pieces of a hook-and-loop fastener. The specific structure of the connecting structure 121 is not limited to the above-mentioned manner, and all combinations are not listed one by one in the present disclosure.

In some embodiments, the inflatable mattress 110 further comprises an electrical connector 1113, the electrical connector 1113 is electrically connected to an on-board power supply of the vehicle 1. When the electrical connector 1113 is disconnected, the inflatable mattress 110 can be completely separated from the storage device 120. After folding the inflatable mattress 110, the user can store the inflatable mattress 110 in the storage device 120, or unplug the electrical connector 1113 to separate the vehicle body and store the inflatable mattress 110 in other locations, and the storage device 120 can also be used as a storage space for storing other items. It offers the advantage of convenient storage while also providing an additional storage space for the user when needed.

In some embodiments, the inflatable mattress assembly 10 further comprises an inflation/deflation device 111, the inflation/deflation device 111 comprises a control module 1112 and an inflation/deflation motor 1111, and the control module 1112 is configured to control the inflation/deflation motor 1111 to inflate or deflate the inflatable mattress 110. The user does not need to perform manual inflation or deflation, and the operation is convenient.

In some embodiments, the control module 1112 comprises a processor and a communication module. The processor may be a large-scale integrated circuit device with a central processing unit function, capable of completing operations such as instruction fetching, instruction execution, and information exchange with external memories and logic components, and the processor may also be other general-purpose processors, digital signal processors, application-specific integrated circuits, field-programmable gate arrays or other programmable logic devices, discrete gate or transistor logic devices, discrete hardware components, etc. A general-purpose processor may be a microprocessor or the processor may be any conventional processor, etc. The communication module implements communication interaction between the device and other devices, and can implement communication in a wired way (such as a CAN bus, USB, a network cable, etc) or a wireless way (such as a mobile network, WIFI, Bluetooth, etc).

In some embodiments, the inflation/deflation device 111 may also be arranged in the storage device 120, the luggage compartment 30 or other positions of the entire vehicle.

In some embodiments, the inflation/deflation motor 1111 may also be an air pump of an air spring or a massage seat in the vehicle 1, and an air passage needs to be added to connect the inflatable mattress 110.

In some embodiments, the control module 1112 may be another electronic device comprising a processor and a memory in the vehicle 1.

In some embodiments, the inflatable mattress assembly 10 further comprises an air pressure detection device 1114, the air pressure detection device 1114 is electrically connected to the control module 1112 or an electronic device of the vehicle 1, so that a detection signal of the air pressure detection device 1114 can be transmitted to the control module 1112 or the electronic device of the vehicle 1 to control an operating state of the inflation/deflation motor 1111.

Exemplarily, a user sets a mattress comfort level (softness/hardness level) via a vehicle terminal or a mobile control terminal, the control module 1112 calculates a preset inflation time according to the mattress softness/hardness level set by the user, and controls the inflation/deflation motor 1111 to inflate the inflatable mattress 110 within the preset time range; the air pressure detection device 1114 detects inflation pressure of the inflatable mattress 110 and transmits the inflation pressure to the control module 1112 or the electronic device of the vehicle 1, so that the inflation/deflation motor 1111 can inflate the inflatable mattress 110 within a preset pressure range; within the preset time range, when the air pressure detection device 1114 detects that the inflation pressure is not within the preset pressure range, the control module 1112 or the electronic device of the vehicle 1 timely controls the inflation/deflation motor 1111 to change the operating state.

Exemplarily, during deflation, when the air pressure detection device 1114 detects that a pressure value of the inflatable mattress 110 has reached a preset vacuum pressure value, the control module 1112 or the electronic device of the vehicle 1 timely controls the inflation/deflation motor 1111 to change the operating state.

Exemplarily, the air pressure detection device 1114 can also monitor the air pressure of the inflatable mattress 110 in real time, when an abnormal air pressure value occurs, the abnormal air pressure information can be synchronized to the mobile control terminal or the vehicle terminal in real time to timely remind the user.

In some embodiments, the inflatable mattress assembly 10 may further comprise a button 1115, the button 1115 is electrically connected to the control module 1112 or an electronic device in the vehicle 1, and configured to acquire an inflation or deflation instruction set by the user.

In some embodiments, the inflatable mattress 110 is made of a TPU composite high-grade suede material, which is more skin-friendly and can meet the needs of taking a nap in the vehicle. The surface of the mattress is designed with four-sided pull straps. Benefiting from the local closed grid space formed by the four-sided pull straps, air flow inside the mattress is reduced, the mattress is not prone to deform when a user sits or lies flat, and has a sense of support.

The present disclosure provides an inflatable mattress system, comprising an inflatable mattress assembly 10 and a user interaction device 20. The user interaction device 20 is electrically connected to the inflatable mattress assembly 10, wherein the electrical connection includes a wired electrical connection and/or a wireless electrical connection. The user interaction device 20 is configured to acquire a user instruction and transmit the user instruction to the inflatable mattress assembly 10.

Exemplarily, after receiving an inflation instruction set by the user via the user interaction device 20, the control module 1112 or the electronic device of the vehicle 1 controls the inflation/deflation motor 1111 to inflate the inflatable mattress 110. After the inflatable mattress 110 is inflated, the connecting structure 121 of the storage device 120 switches states, so that the storage device 120 is switched to the unfolded state, and the inflatable mattress 110 can be continuously inflated to be completely unfolded and laid flat. The user only needs one-touch operation to realize fully automatic unfolding of the inflatable mattress, providing convenience and high intelligent operation.

Exemplarily, after receiving a deflation instruction set by the user via the user interaction device 20, the control module 1112 is configured to control the inflation/deflation motor 1111 to deflate the inflatable mattress 110. After deflation is completed, the control module 1112 sends a current state to the user interaction device 20 to remind the user to fold the inflatable mattress 110.

In some embodiments, the user interaction device 20 may be a vehicle terminal, a mechanical button or a mobile control terminal.

The present disclosure provides a vehicle 1, comprising an inflatable mattress assembly 10, a user interaction device 20, a luggage compartment 30 and/or an inflatable mattress system according to the present disclosure.

Although the embodiments of the present disclosure have been shown and described above, those skilled in the art will understand that various changes, modifications, replacements and variations can be made to the foregoing embodiments without departing from the principle and purpose of the present disclosure, and the scope of the present disclosure is defined by the claims and equivalents thereof.

## Claims

1. An inflatable mattress assembly (10) for a vehicle (1), comprising: an inflatable mattress (110) and a storage device (120);
the storage device (120) defining a storage space, and the storage device (120) being switchable between a folded state and an unfolded state, in the folded state, the inflatable mattress (110) being folded and stored in the storage space;
the storage device (120) further comprising a connecting structure (121), the connecting structure (121) being configured to maintain the storage device (120) in the folded state; the inflatable mattress (110) being configured to, upon inflation, trigger the connecting structure (121) to switch states, so that the storage device (120) is switched from the folded state to the unfolded state; wherein in the unfolded state, the inflatable mattress (110) is further inflated to be completely unfolded and laid flat.

2. The inflatable mattress assembly (10) according to claim 1, wherein the storage device (120) is configured to be arranged in a storage compartment beneath a luggage compartment (30) of the vehicle (1).

3. The inflatable mattress assembly (10) according to claim 1 or 2, wherein a mattress limiting structure (112) is arranged at a bottom of the inflatable mattress (110), and after the inflatable mattress (110) is inflated, the mattress limiting structure (112) is configured to abut against the storage device (120).

4. The inflatable mattress assembly (10) according to any one of claims 1 to 3, wherein the storage device (120) further comprises a storage box body (122) and a cover plate (123); the cover plate (123) is connected to the storage box body (122) via a pivot structure, and when the storage device (120) is in the folded state, the storage box body (122) and the cover plate (123) are configured to form a storage space.

5. The inflatable mattress assembly (10) according to claim 4, wherein after the inflatable mattress (110) is inflated, the cover plate (123) is pivoted to a position where it does not occupy the space required for unfolding the inflatable mattress (110).

6. The inflatable mattress assembly (10) according to any one of claims 1 to 5, wherein the connecting structure (121) is a pressure locking structure, a magnetic connecting structure, a pivot structure or a hook-and-loop fastener.

7. The inflatable mattress assembly (10) according to any one of claims 1 to 6, further comprising an electrical connector (1113), wherein the electrical connector (1113) is electrically connected to an on-board power supply of the vehicle (1), and wherein when the electrical connector (1113) is disconnected, the inflatable mattress (110) is completely separated from the storage device (120).

8. The inflatable mattress assembly (10) according to any one of claims 1 to 7, further comprising: a control module (1112) and an inflation/deflation motor (1111), wherein the control module (1112) is configured to control the inflation/deflation motor (1111) to inflate or deflate the inflatable mattress (110).

9. The inflatable mattress assembly (10) according to claim 8, further comprising an air pressure detection device (1114), wherein the air pressure detection device (1114) is configured to detect an air pressure of the inflatable mattress (110) and transmit the detected air pressure to the control module (1112).

10. An inflatable mattress system, comprising: a user interaction device (20) and an inflatable mattress assembly (10) according to any one of claims 1 to 9, the user interaction device (20) is electrically connected to the inflatable mattress assembly (10), and the user interaction device (20) is configured to acquire a user instruction and transmit the user instruction to the inflatable mattress assembly (10).

11. A vehicle (1), comprising an inflatable mattress assembly (10) according to any one of claims 1 to 9 or an inflatable mattress system according to claim 10.
